# EUROPEAN PATENT APPLICATION

(11) **EP 4 850 984 A1**
(43) Date of publication of application: **09.12.2026**
(21) Application number: 26163502.3
(22) Date of filing: 10.03.2026
(51) Int. Cl.: B60R 9/06, B60R 9/10

(54) **FOLDABLE DEVICE FOR TRANSPORTING A LOAD ON MOTOR VEHICLES**

(30) Priority: 05.06.2025 IT 202500013060
(71) Applicant: GVI S.r.l., 12045 Fossano (CN) (IT)
(72) Inventor: Gemesio, Matteo, 12045 Fossano (CN) (IT)
(74) Representative: Garavelli, Paolo

(57) **Abstract**

A foldable device (10) for transporting a load on motor vehicles is described, which comprises a frame (12) connectable to a towing hook of a vehicle, a base structure (22) connected to the frame (12) and at least one movable load-supporting structure (1), connected to the base structure (22) in a rotatably manner to move into a position of use or into a folded position, and a load-locking element (24), arranged in a vertical position, connected to the base structure (22) and comprising a load-securing device (5), said foldable device (10) for transporting a load on motor vehicles also comprising at least one arm (4) connected to the base structure (22) in a rotatably manner to move into a position of use or into an inclined position to facilitate the positioning of the load.

## Description

The present invention relates to a foldable device for transporting loads, such as bicycles, on motor vehicles. Specifically, the invention relates to a device designed to be cantilevered onto the rear of a motor vehicle, secured to a train coupling connected to the motor vehicle.

Devices for transporting loads on motor vehicles are known, which can be cantilevered to a train hook and folded up to create a device that is easy to transport and store in the trunk of the car.

In general, these devices for transporting loads on motor vehicles can be configured to carry one or more bicycles.

Devices for carrying loads on motor vehicles may not also include load securing devices comprising straps and/or ratchet buckles to secure the load, for example a bicycle, to the load grips.

Although a large number of devices for transporting loads on motor vehicles are known, there is a need for devices that are easy to use, reliable, low cost and that facilitate loading, for example, a bicycle.

Object of the present invention is solving the aforementioned prior art problems by providing a device for transporting a load on motor vehicles of the type that can be cantilevered to a train coupling, capable of being folded so as to obtain a device with small sizes, easy to transport and store in the trunk of the car.

The above and other objects and advantages of the invention, as will result from the following description, are achieved with a foldable device for transporting a load on motor vehicles such as that described in Claim 1. Preferred embodiments and non-trivial variations of the present invention form the subject matter of the dependent claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the appended claims.

The present invention will be better described by some preferred embodiments thereof, provided by way of example and not by way of limitation, with reference to the attached drawings, in which:
- FIG. 1A, 1B, 1C, 1D show perspective views of a foldable device for transporting a load on motor vehicles of the invention in a first embodiment;
- FIGS. 2A, 2B, 2C, 2D show perspective views of a foldable device for transporting a load on motor vehicles according to the present invention in a second embodiment.

With reference to the figures, the foldable device 10 for transporting a load on motor vehicles of the invention, of the type cantilevered to a tow hook, comprises a frame 12, connectable to the tow hook of a vehicle, a base structure 22 connected to the frame 12 and at least one movable load-supporting structure 1, rotatably rotatable to the base structure 22 to move into a use position or into a folded position, and a load-locking element 24 arranged in a substantially vertical position, connected to the base structure 22 and comprising a load-securing device 5, for example by means of straps and/or ratchet buckles or clips, configured to secure the load, for example the bicycle, and preferably to rotate and/or slide on the load-locking element 24 to adapt to the frame of the bicycle to be transported.

The foldable device 10 for transporting a load on motor vehicles of the invention further comprises at least one arm 4 connected to the base structure 22 in a rotatable manner to move into a position of use, using a vertical position, or in an inclined, substantially horizontal position, to facilitate the positioning of the load, for example the bicycle, on the device 10, and further comprises a load fastening device 5 connected to said at least one rotatable arm 4, for example in a sliding manner.

Preferably, the base structure 22 comprises a crosspiece 3, preferably two or more crosspieces 3, connected to the base structure 22 to which the movable structure 1 and said at least one arm 4 are rotatably connected.

In a first embodiment of the invention, the base structure 22 is connected to the (fixed) frame 12 in a rotatably manner to allow the base structure 22, and the parts connected to it, to be tilted with respect to the frame 12, thus facilitating the loading on the device 10 and access to the rear part of the motor vehicle.

In a second embodiment, the base structure 22 is fixed or formed in one piece with the frame 12.

The mobile structure 1 is made with a bar 1 having an essentially "U" shape, preferably two or more bars 1, which can be folded like a book by rotating with respect to the base structure 22 around axes longitudinal to the frame 12, to reach the folded position, preferably in a substantially vertical position; said axes are arranged in the direction of travel of the motor vehicle when the device 10 is connected to the vehicle, and the mobile structure 1, when in the position of use, acts as a support for the wheels of the bicycle; preferably, the bar 1 is connected with its ends, in a rotating manner, to the crosspiece 3.

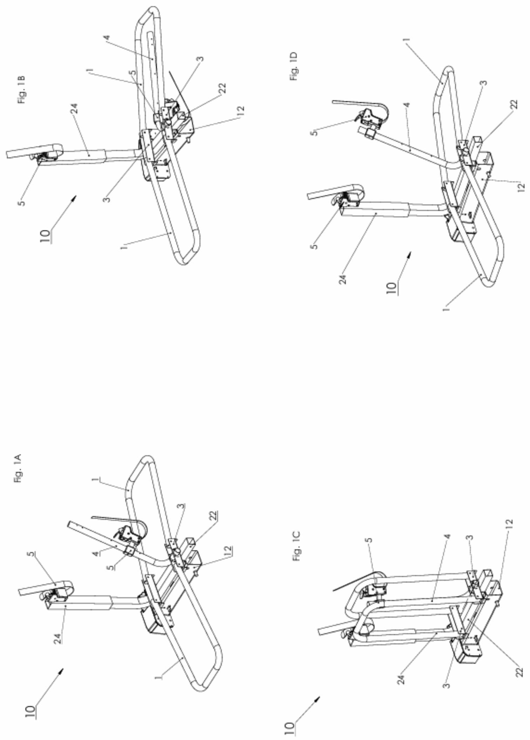

In one embodiment of the foldable device 10 for transporting a load on motor vehicles according to the invention, shown in Figures 1A, 1B, 1C and 1D, the load locking element 24 is connected to the base structure 22, or directly to the frame 12, so as to slide vertically to allow the height of the load securing device 5 to be adjusted to adapt it to the dimensions of the load, in particular the bicycle, to be transported.

The base structure 22 is "L" shaped and the load locking element 24 is a hollow bar sliding relative to a vertical portion of the base structure 22, or of the frame 12, which can be inserted inside the hollow bar and locked by means of fastening means of a known type, not shown in the figure.

Alternatively, the load locking member 24 is made in one piece with the base structure 22, or in one piece with the frame 12; for example, the load locking member 24 is a vertical portion of an "L" shaped bar that forms the fixed structure of the frame 12 or the base structure 22.

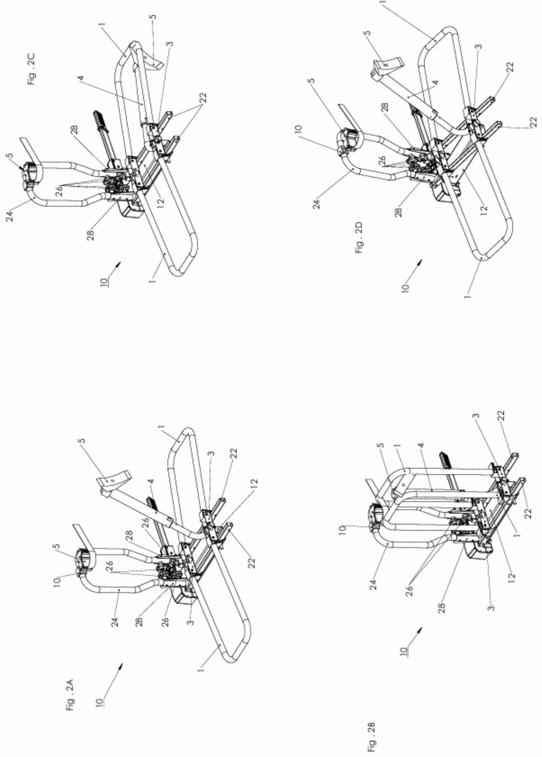

In a second embodiment of the foldable device 10 for transporting a load on motor vehicles according to the invention, shown in Figures 2A, 2B, 2C and 2D, the load locking element 24 is a tube with a substantially inverted "U" shape, configured to lock the load by means of the load securing device 5 and comprises fixing means 26, 28 to the base structure 22, fixed or rotating with respect to the frame 12.

Preferably, the means for securing the load locking element 24 comprise a knob 26 comprising a screw configured to be screwed into threaded holes formed in the base structure 22, for example formed in a plate 28.

In the use configuration, the two portions of the movable structure 1 are rotated so as to open and the load locking element 24 is locked to the base structure 22, by means of the fastening means 26, 28.

Alternatively, the load locking element 24 is made in one piece with the base structure 22, fixed or rotating with respect to the frame 12, or with the frame 12.

In the folded configuration of the device 10, the two portions of the mobile structure 1 are rotated so as to close like a book, and preferably locked in a substantially vertical position.

Advantageously, the foldable device 10 for transporting a load on motor vehicles according to the invention allows for the creation of a device that is easy to use, reliable, low cost and which facilitates loading, for example, a bicycle; in the folded position, the device 10 according to the invention has small dimensions, is easy to transport and can be stored in the trunk of a car.

## Claims

1. Foldable device (10) for carrying a load on motor vehicles comprising a frame (12) connectable to a towing hook of a vehicle, a base structure (22) connected to the frame (12) and at least one movable structure (1) for supporting the load, connected to the base structure (22) in a rotatable manner to move into a position of use or into a folded position, and a load locking element (24), arranged in a vertical position, connected to the base structure (22) and comprising a load securing device (5), said foldable device (10) for carrying a load on motor vehicles further comprising at least one arm (4) connected to the base structure (22) in a rotatable manner to move into a position of use or into an inclined position to facilitate the positioning of the load,
wherein the load locking element (24) is connected to the base structure (22), or to the frame (12), so as to slide vertically to allow the height of the load securing device (5) to be adjusted to suit the dimensions of the load to be transported;
**characterised in that** the basic structure (22) has an "L" shape and the load locking element (24) is a hollow bar sliding with respect to a vertical portion of the basic structure (22), or of the frame (12).

2. Foldable device (10) for transporting a load on motor vehicles according to claim 1, **characterized in that** the frame comprises at least one cross-member (3) connected to the base structure (22), said movable structure (1) and arm (4) being rotatably connected to said at least one cross-member (3).

3. Foldable device (10) for transporting a load on motor vehicles according to claim 1 or 2, **characterized in that** the mobile structure (1) is made with a bar (1) with a substantially "U" shape which rotates with respect to the base structure (22) around an axis longitudinal to the frame (12).

4. Foldable device (10) for transporting a load on motor vehicles according to claim 3 dependent on 2, **characterized in that** the bar (1) is connected with its ends, in a rotating manner, to the crosspiece (3).

5. Foldable device (10) for transporting a load on motor vehicles according to any of the preceding claims, **characterized in that** the base structure (22) is connected to the frame (12) in a rotating manner to allow the base structure (22) and the parts connected to it to be tilted with respect to the frame (12), facilitating loading onto the device (10) and access to the rear part of the motor vehicle.

6. Foldable device (10) for transporting a load on motor vehicles according to any of claims 1 to 4, **characterized in that** the basic structure (22) is fixed or formed in one piece with the frame (12).

7. Foldable device (10) for transporting a load on motor vehicles according to any of claims 1 to 6, **characterized in that** the load locking element (24) is made in one piece with the base structure (22), or in one piece with the frame (12).

8. Foldable device (10) for transporting a load on motor vehicles according to any of claims 1 to 6, **characterized in that** the load locking element (24) is a tube with a substantially inverted "U" shape, configured to lock the load by means of the load securing device (5).
